# EUROPEAN PATENT SPECIFICATION

(11) **EP 4 635 793 B1**
(45) Date of publication and mention of the grant of the patent: **13.05.2026**
(21) Application number: 24215500.0
(22) Date of filing: 26.11.2024
(51) Int. Cl.: B60N 2/28

(54) **SUPPORT LEG ANTI-PINCH STRUCTURE AND CHILD SAFETY SEAT**
KLEMMSCHUTZSTRUKTUR FÜR STÜTZBEIN UND KINDERSICHERHEITSSITZ
STRUCTURE ANTI-PINCEMENT DE JAMBE DE SUPPORT ET SIÈGE DE SÉCURITÉ POUR ENFANT

(30) Priority: 16.04.2024 CN 202420787509 U
(43) Date of publication of application: 22.10.2025
(73) Proprietor: Ningbo Baby First Baby Products Co., Ltd., Ningbo, Zhejiang 315412 (CN)
(72) Inventor: ZHANG, Yeye, NINGBO, ZHEJIANG, 315412 (CN); CAO, Wenyong, NINGBO, ZHEJIANG, 315412 (CN)
(74) Representative: Santarelli

(56) References cited:
- CN-A- 108 045 278
- CN-A- 110 281 821
- CN-A- 114 425 974

## Description

### Technical Field

This invention relates to the field of child safety seat technology, specifically to a support leg anti-pinch structure and child safety seat.

### Background Technology

Child safety seats are essential items for infants and children traveling in vehicles. To prevent the child safety seat from moving due to inertia during sudden braking and other situations, a support leg is generally set at the front end of the support leg cover, which can also be retracted when not in use. However, in existing support legs, there is a gap between the support leg and the support leg cover during use. When fingers are placed in this gap, they can easily be pinched by the support leg, causing injury. CN 114425974 discloses a child safety seat with a support leg.

### Disclosure Content

To solve at least one aspect of the above problems, this invention first provides a support leg anti-pinch structure, including a support leg and support leg cover rotatably connected to each other, with a sliding piece movably connected between the support leg cover and the support leg. When the support leg rotates relative to the support leg cover, the sliding piece moves in the front-back direction to cover the rotational gap between the support leg and the support leg cover.

Optionally, the support leg cover is provided with a torsion spring, the two ends of the torsion spring are connected to the support leg cover and the sliding piece respectively, and the sliding piece slides relative to the support leg cover under the pressure of the torsion spring and the support leg.

Optionally, the sliding piece is provided with a support column, the support leg cover is provided with a sliding groove that slidably matches with the support column, and the torsion spring abuts against the side of the support column facing away from the support leg.

Optionally, when the support leg switches from the extended state to the retracted state, the sliding piece separates from the front side of the support leg cover under the action of the torsion spring; when the support leg is in the extended state, the sliding piece abuts against the front side of the support leg cover under the pressure of the support leg.

Optionally, the sliding piece is provided with a locking block, the support leg cover is provided with a locking slot, and the locking block is slidably engaged in the locking slot.

Optionally, the support leg cover includes a top cover and a bottom cover, one end of the support leg is embedded inside the bottom cover, the sliding piece is installed at the front end of the bottom cover, and the top cover is covered on top of the bottom cover.

Optionally, the sliding piece is provided with a first guide surface and a second guide surface, the first guide surface matches with the support leg, and the second guide surface matches with the support leg cover.

Optionally, the first guide surface is an arc surface.

Optionally, the sliding piece is embedded inside the support leg cover.

Compared to existing technology, the support leg anti-pinch structure of this disclosure prevents users' fingers from being pinched in the gap during rotation due to the presence of a rotational gap between the support leg and support leg cover. The sliding piece covering this gap eliminates the risk of hand pinching during support leg rotation, with a simple structure and low cost. Moreover, the entire structure has the sliding piece placed inside the support leg cover, making it concealed, without affecting the movement of the support leg or the overall external dimensions, providing users with a good product experience.

Additionally, this invention provides a child safety seat that includes the aforementioned support leg anti-pinch structure.

Compared to existing technology, the child safety seat of this invention has the same advantages as the aforementioned support leg anti-pinch structure relative to existing technology, which will not be repeated here.

### Brief Description of Figures

Figure 1 is an exploded view of the support leg anti-pinch structure in an embodiment of this invention;
Figure 2 is a schematic diagram of the support leg in retracted state in an embodiment of this invention;
Figure 3 is a bottom view from one angle of Figure 2;
Figure 4 is a schematic diagram of the support leg in extended state in an embodiment of this invention;
Figure 5 is a partial bottom view from one angle of Figure 4;
Figure 6 is a structural diagram of the sliding piece in an embodiment of this invention;
Figure 7 is a structural diagram of the torsion spring and sliding piece in retracted state in an embodiment of this invention;
Figure 8 is a structural diagram of the torsion spring and sliding piece in extended state in an embodiment of this invention;
Figure 9 is a partial exploded view of the support leg anti-pinch structure and child safety seat in an embodiment of this invention;

### Description of reference numerals:

100 - support leg anti-pinch structure; 1 - support leg; 2 - support leg cover; 21 - top cover; 22 - bottom cover; 23 - sliding groove; 24 - locking slot; 3 - sliding piece; 31 - support column; 32 - locking block; 4 - torsion spring.

### Detailed Description of Embodiments

To make the above objectives, features and advantages of this invention more apparent and easier to understand, detailed descriptions of specific embodiments of this invention are provided below in conjunction with the figures. In the description of this invention, it should be understood that terms such as "upper" and "lower" indicate directional or positional relationships based on the normal use orientation or position of the product.

The terms "first" and "second" are used only for descriptive purposes and should not be understood as indicating or implying relative importance or implicitly specifying the number of technical features indicated. Thus, features defined as "first" and "second" may explicitly or implicitly include at least one such feature.

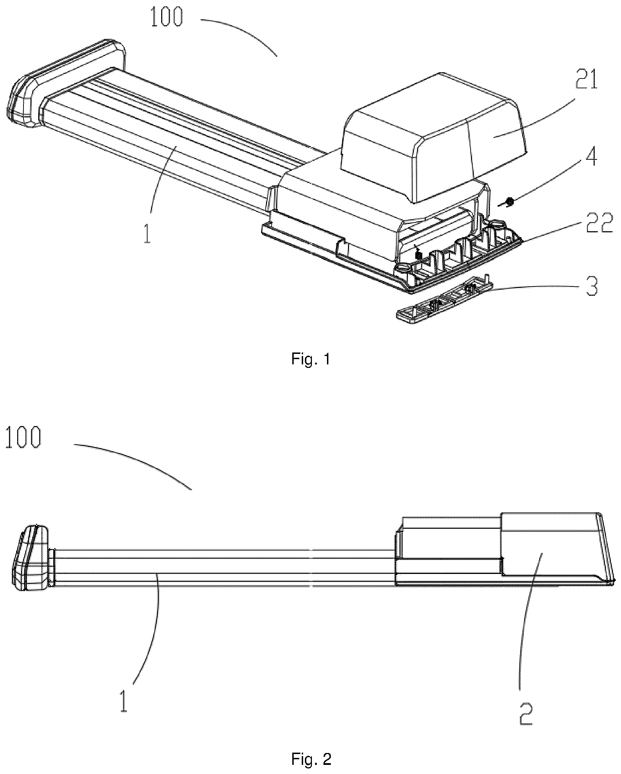

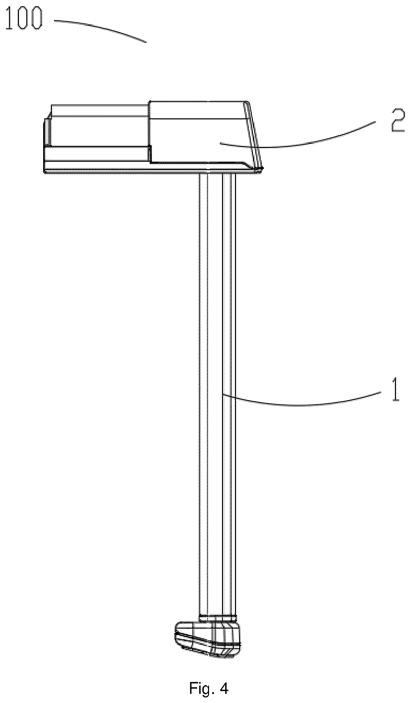

This embodiment of the invention provides a support leg anti-pinch structure. Referring to the structure and directions shown in Figures 1 to 9, it includes a support leg 1 and a support leg cover 2 rotatably connected to each other, with a sliding piece 3 movably connected between the support leg cover 2 and the support leg 1. When the support leg 1 rotates relative to the support leg cover 2, the sliding piece 3 moves in the front-back direction to cover the rotational gap between the support leg 1 and the support leg cover 2. The initial state of the support leg 1 is retracted, and its working state is extended. As shown in Figures 2 and 4, in the retracted state, the rotation angle between the support leg 1 and the support leg cover 2 is nearly 0 degrees, while in the working state, the rotation angle is nearly 90 degrees. When the support leg 1 switches between retracted and extended states, it rotates between 0-90 degrees. Due to the rotational gap between the support leg 1 and the support leg cover 2 during rotation, there is a risk of users' fingers getting pinched in this gap. Moreover, when applied to child safety seats, children's active nature makes it easier for them to reach into the rotational gap and get injured. The sliding piece 3 is set to cover the rotational gap, preventing users' fingers from getting pinched in the gap and eliminating the risk of hand pinching during support leg rotation, with a simple structure and low cost.

As shown in Figure 1, the support leg cover 2 is provided with a torsion spring 4, with the two ends of the torsion spring 4 connected to the support leg cover 2 and the sliding piece 3 respectively. The sliding piece 3 slides relative to the support leg cover 2 under the pressure of the torsion spring 4 and the support leg 1. The support leg cover 2 has a fixed axis, and the torsion spring 4 is fitted on this fixed axis. One end of the torsion spring 4 protrudes outward and abuts against the sliding piece 3. When the support leg 1 switches from the extended state to the retracted state, the sliding piece 3 separates from the front side of the support leg cover 2 under the action of the torsion spring 4. When the support leg 1 is in the extended state, the sliding piece 3 abuts against the front side of the support leg cover 2 under the pressure of the support leg 1. Under the force of the torsion spring 4, the sliding piece 3 always follows the support leg 1. As the support leg 1 rotates back and forth, the sliding piece 3 slides back and forth relative to the support leg cover 2. The force of the torsion spring 4 on the sliding piece 3 is opposite to the force of the support leg 1 on the sliding piece 3.

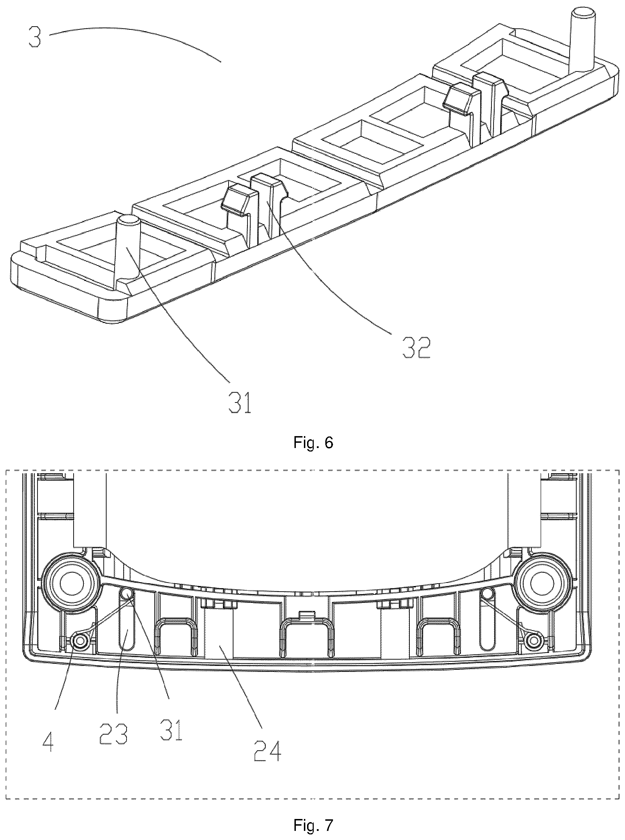

As shown in Figures 6 to 8, the sliding piece 3 is provided with a support column 31, the support leg cover 2 is provided with a sliding groove 23 that slidably matches with the support column 31, and the torsion spring 4 abuts against the side of the support column 31 facing away from the support leg 1.

As shown in Figure 7, taking the left torsion spring 4 as an example, when the support leg 1 is in the retracted state, the torsion spring 4 is in a compressed state with a tendency to rotate counterclockwise, causing the support column 31 to experience an upward elastic force and be pressed against the top of the sliding groove 23, thus covering the rotational gap of the support leg 1. The length direction of the sliding groove 23 is consistent with the front-back direction, allowing the support column 31 to move back and forth within the sliding groove 23, enabling the sliding piece 3 to move back and forth relative to the support leg cover 2, with a simple structure that is stable and reliable.

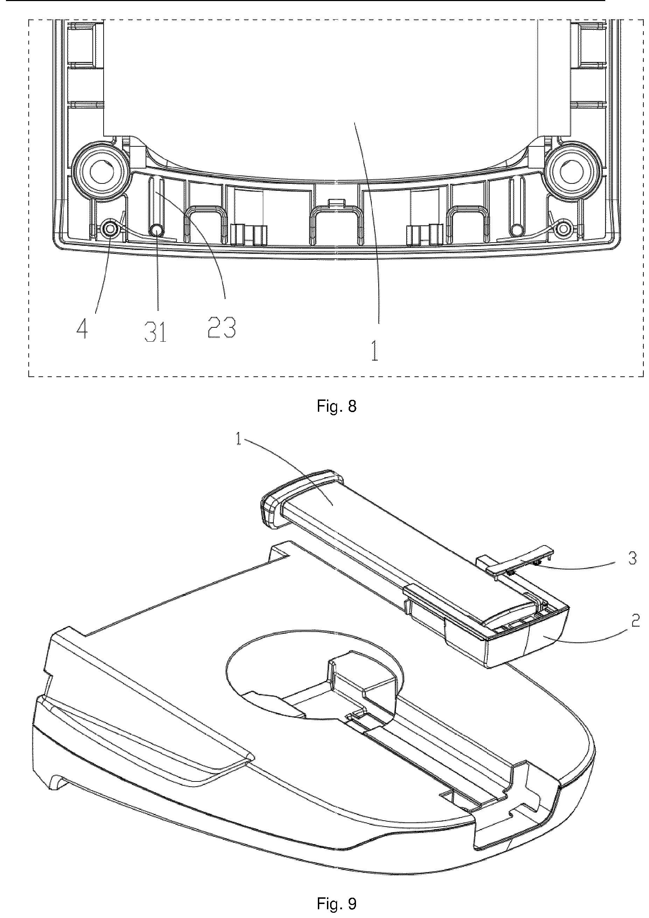

As shown in Figure 8, taking the left torsion spring 4 as an example, when the support leg 1 is in the extended state, the sliding piece 3 is pushed by the support leg 1 to the bottom of the sliding groove 23, fixing the sliding piece 3 at the front end position of the support leg cover 2, closely fitting with the front end of the support leg cover 2. At this time, one end of the torsion spring 4 is compressed to the bottom along with the sliding piece 3. When the support leg 1 retracts to the retracted state, the torsion spring 4 provides power for the sliding piece 3 to reset. Under the elastic force of the torsion spring 4, the sliding piece 3 moves upward, returning to its original state.

The torsion spring 4 is ingeniously designed to work with the support leg 1 inside the support leg cover 2 to press the sliding piece 3, thereby adjusting the position of the sliding piece 3. This ensures that the entire structure of the sliding piece 3 is placed inside the support leg cover 2, making it concealed. It does not affect the movement of the support leg 1 or the overall external dimensions, providing users with a good product experience.

As shown in Figures 6 to 8, the sliding piece 3 is provided with a locking block 32, the support leg cover 2 is provided with a locking slot 24, and the locking block 32 is slidably engaged in the locking slot 24. The locking block 32 is provided with a guide surface. When installing the sliding piece 3, the guide surface provides guidance, allowing the locking block 32 to smoothly engage in the locking slot 24. When the support column 31 slides in the sliding groove 23, the locking block 32 also slides synchronously in the locking slot 24.

As shown in Figure 1, the support leg cover 2 includes a top cover 21 and a bottom cover 22, one end of the support leg 1 is embedded inside the bottom cover 22, the sliding piece 3 is installed at the front end of the bottom cover 22, and the top cover 21 is covered on top of the bottom cover 22. The sliding groove 23 and the locking slot 24 are both set at the front end of the bottom cover 22. When the support leg 1 is in the retracted state, it is nearly parallel to the bottom cover 22; when the support leg 1 is in the extended state, it is nearly perpendicular to the bottom cover 22. When the support leg 1 switches from retracted state to extended state, it rotates away from the top cover 21; when the support leg 1 switches from extended state to retracted state, it rotates towards the top cover 21. When the support leg 1 is extended, it presses the sliding piece 3 to the front end of the bottom cover 22 and fits tightly against the inner wall of the bottom cover 22. The top cover 21 covers the bottom cover 22, concealing the internal parts and rotational structure between the support leg covers 2, making it more dust-proof and aesthetically pleasing, while further preventing hand pinching.

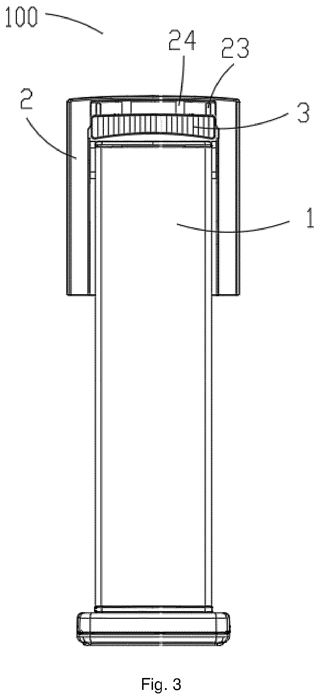

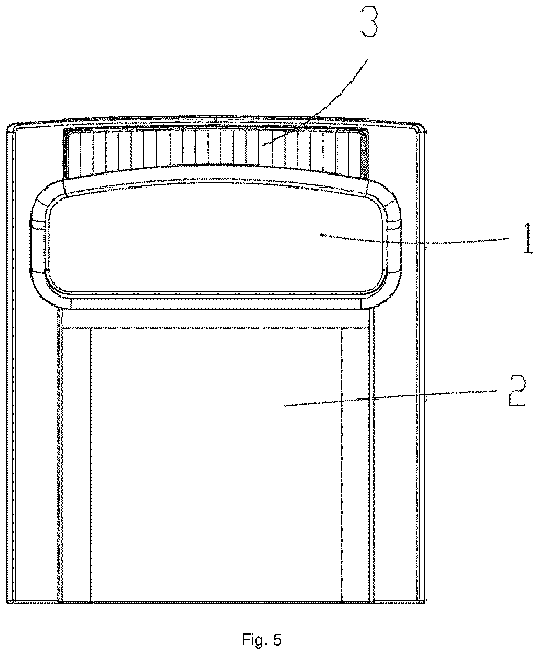

As shown in Figures 3 and 5, the sliding piece 3 is provided with a first guide surface and a second guide surface, the first guide surface matches with the support leg 1, and the second guide surface matches with the support leg cover 2. The first guide surface and the second guide surface are located at opposite ends of the sliding piece 3. When the support leg 1 rotates to the extended state, one end of the sliding piece 3 abuts against the side wall of the support leg 1, with the first guide surface matching the shape of the support leg 1's side wall. When the support leg 1 rotates to the extended state, the other end of the sliding piece 3 abuts against the inner wall of the bottom cover 22, with the second guide surface matching the shape of the bottom cover 22's inner wall.

As shown in Figures 3 and 5, the first guide surface is an arc surface. In this embodiment, since the side wall of the support leg 1 is arc-shaped, the first guide surface is an arc surface. This design allows the support leg 1 to rotate more smoothly when pushing the sliding piece 3, avoiding jamming. At the same time, when the support leg 1 is in the extended state, the front side of the support leg 1 completely fits with the first guide surface, preventing users from pinching their hands.

As shown in Figure 3, the sliding piece 3 is embedded inside the support leg cover. This embedded design allows the sliding piece 3 to be concealed, without affecting the movement of the support leg 1 or the overall external dimensions of the support leg anti-pinch structure 100, providing users with a good product experience.

As shown in Figure 6, the sliding piece 3 has a symmetrical structure. Two support columns 31 and two locking blocks 32 are symmetrically arranged on the sliding piece 3. The support leg cover 2 is correspondingly provided with two sliding grooves 23 and two locking slots 24. The two torsion springs 4 abut against the lower sides of the two support columns 31 respectively.

Another embodiment of this invention provides a child safety seat, including the support leg anti-pinch structure 100 described above. As shown in Figure 9, the child safety seat includes a base, and the support leg anti-pinch structure 100 is installed on the base.

## Claims

1. A support leg anti-pinch structure, comprising a support leg (1) and a support leg cover (2) rotatably connected to each other, with a sliding piece (3) movably connected between the support leg cover (2) and the support leg (1), **characterized in that** when the support leg (1) rotates relative to the support leg cover (2), the sliding piece (3) moves in the front-back direction to cover the rotational gap between the support leg (1) and the support leg cover (2).

2. The support leg anti-pinch structure according to claim 1, **characterized in that** the support leg cover (2) is provided with a torsion spring (4), the two ends of the torsion spring (4) are connected to the support leg cover (2) and the sliding piece (3) respectively, and the sliding piece (3) slides relative to the support leg cover (2) under the pressure of the torsion spring (4) and the support leg (1).

3. The support leg anti-pinch structure according to claim 2, **characterized in that** the sliding piece (3) is provided with a support column (31), the support leg cover (2) is provided with a sliding groove (23) that slidably matches with the support column (31), and the torsion spring (4) abuts against the side of the support column (31) facing away from the support leg (1).

4. The support leg anti-pinch structure according to claim 3, **characterized in that** when the support leg (1) switches from the extended state to the retracted state, the sliding piece (3) separates from the front side of the support leg cover (2) under the action of the torsion spring (4); when the support leg (1) is in the extended state, the sliding piece (3) abuts against the front side of the support leg cover (2) under the pressure of the support leg (1).

5. The support leg anti-pinch structure according to claim 1, **characterized in that** the sliding piece (3) is provided with a locking block (32), the support leg cover (2) is provided with a locking slot (24), and the locking block (32) is slidably engaged in the locking slot (24).

6. The support leg anti-pinch structure according to claim 1, **characterized in that** the support leg cover (2) includes a top cover (21) and a bottom cover (22), one end of the support leg (1) is embedded inside the bottom cover (22), the sliding piece (3) is installed at the front end of the bottom cover (22), and the top cover (21) is covered on top of the bottom cover (22).

7. The support leg anti-pinch structure according to claim 1, **characterized in that** the sliding piece (3) is provided with a first guide surface and a second guide surface, the first guide surface matches with the support leg (1), and the second guide surface matches with the support leg cover (2).

8. The support leg anti-pinch structure according to claim 7, **characterized in that** the first guide surface is an arc surface.

9. The support leg anti-pinch structure according to any one of claims 1 to 8, **characterized in that** the sliding piece (3) is embedded inside the support leg cover (2).

10. A child safety seat, **characterized by** comprising the support leg anti-pinch structure according to any one of claims 1-9.

## Patentansprüche

1. Einklemmschutzstruktur für ein Stützbein, umfassend ein Stützbein (1) und eine Stützbeinabdeckung (2), die drehbar miteinander verbunden sind, mit einem Schiebestück (3), das beweglich zwischen der Stützbeinabdeckung (2) und dem Stützbein (1) verbunden ist, **dadurch gekennzeichnet, dass** sich das Schiebestück (3), wenn sich das Stützbein (1) relativ zu der Stützbeinabdeckung (2) dreht, in die vordere-hintere Richtung bewegt, um den Drehspalt zwischen dem Stützbein (1) und der Stützbeinabdeckung (2) abzudecken.

2. Einklemmschutzstruktur für ein Stützbein nach Anspruch 1, **dadurch gekennzeichnet, dass** die Stützbeinabdeckung (2) mit einer Torsionsfeder (4) versehen ist, die beiden Enden der Torsionsfeder (4) mit der Stützbeinabdeckung (2) bzw. dem Schiebestück (3) verbunden sind und das Schiebestück (3) unter dem Druck der Torsionsfeder (4) und des Stützbeins (1) relativ zu der Stützbeinabdeckung (2) gleitet.

3. Einklemmschutzstruktur für ein Stützbein nach Anspruch 2, **dadurch gekennzeichnet, dass** das Schiebestück (3) mit einer Stützsäule (31) versehen ist, die Stützbeinabdeckung (2) mit einer Gleitnut (23) versehen ist, die gleitend mit der Stützsäule (31) übereinstimmt, und die Torsionsfeder (4) an der dem Stützbein (1) abgewandten Seite der Stützsäule (31) anliegt.

4. Einklemmschutzstruktur für ein Stützbein nach Anspruch 3, **dadurch gekennzeichnet, dass** sich bei dem Wechsel des Stützbeins (1) aus dem ausgefahrenen Zustand in den eingefahrenen Zustand das Schiebestück (3) unter Einwirkung der Torsionsfeder (4) von der Vorderseite der Stützbeinabdeckung (2) trennt; wenn sich das Stützbein (1) in dem ausgefahrenen Zustand befindet, das Schiebestück (3) unter dem Druck des Stützbeins (1) an der Vorderseite der Stützbeinabdeckung (2) anliegt.

5. Einklemmschutzstruktur für ein Stützbein nach Anspruch 1, **dadurch gekennzeichnet, dass** das Schiebestück (3) mit einem Verriegelungsblock (32) versehen ist, die Stützbeinabdeckung (2) mit einem Verriegelungsschlitz (24) versehen ist und der Verriegelungsblock (32) verschiebbar in den Verriegelungsschlitz (24) eingreift.

6. Einklemmschutzstruktur für ein Stützbein nach Anspruch 1, **dadurch gekennzeichnet, dass** die Stützbeinabdeckung (2) eine obere Abdeckung (21) und eine untere Abdeckung (22) einschließt, ein Ende des Stützbeins (1) in die untere Abdeckung (22) eingebettet ist, das Schiebestück (3) an dem vorderen Ende der unteren Abdeckung (22) installiert ist und die obere Abdeckung (21) oben auf der unteren Abdeckung (22) abgedeckt ist.

7. Einklemmschutzstruktur für ein Stützbein nach Anspruch 1, **dadurch gekennzeichnet, dass** das Schiebestück (3) mit einer ersten Führungsfläche und einer zweiten Führungsfläche versehen ist, die erste Führungsfläche mit dem Stützbein (1) übereinstimmt und die zweite Führungsfläche mit der Stützbeinabdeckung (2) übereinstimmt.

8. Einklemmschutzstruktur für ein Stützbein nach Anspruch 7, **dadurch gekennzeichnet, dass** die erste Führungsfläche eine Bogenfläche ist.

9. Einklemmschutzstruktur für ein Stützbein nach einem der Ansprüche 1 bis 8, **dadurch gekennzeichnet, dass** das Schiebestück (3) in die Stützbeinabdeckung (2) eingebettet ist.

10. Kindersicherheitssitz, **dadurch gekennzeichnet, dass** er die Einklemmschutzstruktur für ein Stützbein nach einem der Ansprüche 1 bis 9 umfasst.

## Revendications

1. Structure anti-pincement de jambe de support, comportant une jambe de support (1) et un capot de jambe de support (2) reliés l'un à l'autre en rotation, avec une pièce coulissante (3) reliée de manière mobile entre le capot de jambe de support (2) et la jambe de support (1), **caractérisée en ce que** lorsque la jambe de support (1) tourne par rapport au capot de jambe de support (2), la pièce coulissante (3) se déplace dans la direction avant-arrière pour couvrir l'espace de rotation entre la jambe de support (1) et le capot de jambe de support (2).

2. Structure anti-pincement de jambe de support selon la revendication 1, **caractérisée en ce que** le capot de jambe de support (2) est pourvu d'un ressort de torsion (4), les deux extrémités du ressort de torsion (4) sont reliées respectivement au capot de jambe de support (2) et à la pièce coulissante (3), et la pièce coulissante (3) coulisse par rapport au capot de jambe de support (2) sous la pression du ressort de torsion (4) et de la jambe de support (1).

3. Structure anti-pincement de jambe de support selon la revendication 2, **caractérisée en ce que** la pièce coulissante (3) est pourvue d'une colonne de support (31), le capot de jambe de support (2) est pourvu d'une rainure coulissante (23) qui correspond de manière coulissante à la colonne de support (31), et le ressort de torsion (4) bute contre le côté de la colonne de support (31) orienté à l'opposé de la jambe de support (1).

4. Structure anti-pincement de jambe de support selon la revendication 3, **caractérisée en ce que** lorsque la jambe de support (1) passe de l'état déployé à l'état rétracté, la pièce coulissante (3) se sépare de la face avant du capot de jambe de support (2) sous l'action du ressort de torsion (4) ; lorsque la jambe de support (1) est à l'état déployé, la pièce coulissante (3) bute contre la face avant du capot de jambe de support (2) sous la pression de la jambe de support (1).

5. Structure anti-pincement de jambe de support selon la revendication 1, **caractérisée en ce que** la pièce coulissante (3) est pourvue d'un bloc de verrouillage (32), le capot de jambe de support (2) est pourvu d'une fente de verrouillage (24), et le bloc de verrouillage (32) est inséré de manière coulissante dans la fente de verrouillage (24).

6. Structure anti-pincement de jambe de support selon la revendication 1, **caractérisée en ce que** le capot de jambe de support (2) comprend un capot supérieur (21) et un capot inférieur (22), une extrémité de la jambe de support (1) est encastrée à l'intérieur du capot inférieur (22), la pièce coulissante (3) est installée à l'extrémité avant du capot inférieur (22), et le capot supérieur (21) est recouvert sur le dessus du capot inférieur (22).

7. Structure anti-pincement de jambe de support selon la revendication 1, **caractérisée en ce que** la pièce coulissante (3) est pourvue d'une première surface de guidage et d'une deuxième surface de guidage, la première surface de guidage correspond à la jambe de support (1), et la deuxième surface de guidage correspond au capot de jambe de support (2).

8. Structure anti-pincement de jambe de support selon la revendication 7, **caractérisée en ce que** la première surface de guidage est une surface d'arc.

9. Structure anti-pincement de jambe de support selon l'une quelconque des revendications 1 à 8, **caractérisée en ce que** la pièce coulissante (3) est encastrée à l'intérieur du capot de jambe de support (2).

10. Siège de sécurité pour enfant, **caractérisé en ce qu'**il comporte la structure anti-pincement de jambe de support selon l'une quelconque des revendications 1-9.
